# EUROPEAN PATENT APPLICATION

(11) **EP 2 149 541 A1**
(43) Date of publication of application: **03.02.2010**
(21) Application number: 08740184.0
(22) Date of filing: 10.04.2008
(51) Int. Cl.: C04B 35/66, B22D 11/10, F27D 1/16, C21C 5/44

(54) **BAKING REPAIRING MATERIAL**

(30) Priority: 18.05.2007 JP 2007133444
(71) Applicant: SHINAGAWA REFRACTORIES CO., LTD., Tokyo 102-0073 (JP)
(72) Inventor:
(74) Representative: HOFFMANN EITLE
(86) International application number: PCT/JP2008/057083
(87) International publication number: WO 2008/142925

(57) **Abstract**

An object is to provide a nonaqueous hot casting repair mix which, while enjoying simple and convenient installation, can substantially reduce hardening time after installation.

The hot casting repair mix according to the invention is **characterized by** containing 5 to 30% by weight of a binder capable of forming a carbon bond in hot condition and 1 to less than 5% by weight of an iron powder and the balance consisting of a refractory aggregate.

## Description

### Technical Field

The present invention relates to a hot casting repair mix for repairing various refining furnace, vessels, and the like in hot condition.

### Background Art

As a hot repairing method of molten metal vessels such as steel converters and ladles, a method of charging a powdery repairing material into the furnace and baking the material is widely used since transportation and storage of the material are easy and additionally installation is simple and convenient such that a prior kneading step, e.g., included in cast repairing is unnecessary and the material is charged into the furnace and baked by remaining heat of the furnace. The powdery hot casting repair mixes are roughly classified into aqueous one and nonaqueous one. As the aqueous material, for example, hot casting repair mixes which use phosphate salts or silicate salts containing water of crystallization are disclosed in Patent Document 1.

The nonaqueous hot casting repair mix using tar, pitch or the like is known to have a good durability as compared with the aqueous hot casting repair mix but the former material has a drawback that a long hardening time is required. In Patant Document 2, addition of Mg powder is disclosed as a method for reducing the hardening time. However, there remain problems that the Mg powder not only is expensive and lowers economical efficiency but also has a high risk of dust explosion and thus the greatest care is necessary for handling of raw materials during production.

On the other hand, Patent Document 3 discloses addition of an iron powder and an Al powder as a technology for improving a nonaqueous hot casting repair mix. During baking, the iron powder precipitates inside the material and has an action of heat absorption from an adhering surface, so that the powder improves adhesiveness of the hot casting repair mix. However, actually, even when the material adheres once by the cooling effect during baking, since the iron powder is present as a film of molten iron between the hot casting repair mix and furnace wall (adhering surface), adhesion strength is impaired and rather exfoliation tends to occur, so that improvement in durability has not been achieved.
Patent Document 1: Japanese Patent Application Raid-Open: JP-A-2-26874
Patent Document 2: Japanese Patent Application Raid-Open: JP-A--11-290771
Patent Document 3: Japanese Patent Application Raid-Open: JP-A-11-278948

### Disclosure of the Invention

### Problems that the Invention is to Solve

Many of recent molten metal vessels such as steel converters and ladles are those where a carbon-based refractory is used as a liner. Form the viewpoint of adhesiveness to the mother material, a nonaqueous material capable of forming a carbon bond upon hot work is desired in the hot repairing. However, a powdery nonaqueous hot casting repair mix enables easy installation but has a drawback that the hardening time after charging is long and hence there is a problem that the material cannot be used in the case where a long repairing time is not allowed.

### Means for Solving the Problems

The invention provides a powdery nonaqueous hot casting repair mix which, while enjoying simple and convenient installation, can substantially reduce the hardening time after installation and is excellent in economical efficiency and durability.
Namely, it is a hot casting repair mix comprising 5 to 30% by weight of a binder capable of forming a carbon bond in hot condition and 1 to less than 5% by weight of an iron powder and the balance consisting of a refractory aggregate.

Furthermore, in the present invention, a better effect is obtained in the case where a fluidization promoter is contained in an amount of 0.1 to 1% by weight relative to 1% by weight of the binder capable of forming a carbon bond in hot condition and the total amount of the binder capable of forming a carbon bond in hot condition and the fluidization promoter is 5 to 30% by weight and an iron powder is contained in an amount of 1 to less than 5% by weight and the balance consisting of a refractory aggregate.
Namely, for the purpose of imparting fluidization, it is preferred to add a fluidization promoter within a range where the sedimentation of the iron powder is not facilitated and the effect is not inhibited.

The furnace wall of the molten metal vessel to be repaired is so hot as at least 700°C or higher. When the hot casting repair mix according to the present invention is charged into the furnace, a powdery particulate binder is melted by remaining heat of the furnace and the whole repairing material becomes in a fluidized state, so that it fills into details of places to be repaired and at the same time a refractory material is closely filled. Then, the hot casting repair mix forms a carbon bond after hardened by the action of the binder.

Since the hot casting repair mix of the present invention has an improved thermal conductivity of the material owing to the addition of the iron powder, elevation of the material temperature is rapid and carbonation of the binder is promoted during fluidization and heat reception in hot condition, so that the hardening time is substantially reduced. The iron powder precipitates by gravity separation from the refractory aggregate during the fluidization but it becomes possible to suppress an adverse effect on the adhering surface by limiting the amount thereof to be added.

### Advantage of the Invention

Since the hot casting repair mix of the present invention can effectively transfer furnace heat to the material during baking, the hardening time can be reduced. Moreover, since the adhesion strength is not impaired during hot working, exfoliation hardly occurs and thus the material is excellent in durability. The hot casting repair mix of the present invention remarkably contributes to improvement in working ratio and life of the furnaces such as molten metal vessels owing to the economical efficiency and an excellent repairing effect.

### Best Mode for Carrying Out the Invention

The refractory aggregate for use in the present invention is not particularly limited and suitable one adapted to the mother material used at the place to be repaired can be employed. For example, the refractory aggregate is one or more of acidic oxides such as silica and zircon; neutral oxides such as alumina and chromia; basic oxides such as magnesia, calcia and dolomite; non-oxides such as carbonaceous materials, silicon carbide and silicon nitride; various kinds of brick scraps; and the like. It is preferable for these refractory aggregates to suitably adjust the grain size to coarse grains, medium grains, and fine grains so that the structure of the hot casting repair mix becomes a closely packed structure.

The iron powder for use in the present invention includes iron alloys but the purity of Fe is not particularly limited and inexpensive one is preferable from economical viewpoints. The amount of the iron powder to be used is 1 to less than 5% by weight relative to 100% by weight of the hot casting repair mix. When the amount is less than 1% by weight, the effect of the present invention (improvement in thermal conductivity of the material) is not sufficiently obtained and thus the hardening time is not reduced. Moreover, when the amount is 5% by weight or more, the iron powder precipitates on the repairing surface (adhering surface) during fluidization, the film of molten iron formed on the adhering surface at the operation of the furnace after hot casting repairing increases, and exfoliation tends to occur, so that the case is not preferable.
Furthermore, the grain size of the iron powder for use in the present invention is preferably fine and coarse grains are not preferable since the iron powder tends to precipitate during fluidization. When availability in the market is considered, a maximum grain size of 1.5 mm or less is preferable. A lower limit of the grain size is not particularly defined so far as it is fine within an inexpensively available range. Incidentally, the use of aluminum known as an antioxidant, copper having a high thermal conductivity and the like can also bring about expectation of the effect of improving thermal conductivity of the material but the use is not preferable since they are expensive and thus lower economical efficiency.

As the binder capable of forming a carbon bond during hot work, a powdery particulate pitch or phenol resin used as a usual organic binder can be employed. The amount of the binder capable of forming a carbon bond to be used is 5 to 30% by weight relative to 100% by weight of the hot casting repair mix. When the amount is less than 5% by weight, the carbon bond is not sufficiently formed and an executed body inferior in strength and adhesiveness is obtained and when the amount exceeds 30% by weight, an executed body having a large porosity is obtained and thus anticorrosive properties decrease.

The fluidization promoter is used for promoting fluidization by melt softening of the binder and imparting wide repairing area and heat-receiving area to the hot casting repair mix. One or two or more selected from p-alkylphenols, lactams, bisphenol, diphenyl, diphenylamine, paraffin, wax and the like can be used.
In the case of using the fluidization promoter, the total amount of the binder capable of forming a carbon bond in hot condition and the fluidization promoter is 5 to 30% by weight and the fluidization promoter is used in an amount of 0-1 to 1% by weight, preferably 0.1 to 0.6% by weight relative to 1% by weight of the binder capable of forming a carbon bond. When the amount is less than 0.1% by weight, the fluidization promoting effect is not obtained and when the amount exceeds 1% by weight, the viscosity of the hot casting repair mix tends to decrease and the iron powder precipitates on the repairing surface (adhering surface), so that the cases are not preferable.

### Examples

The following will describe the invention specifically with reference to inventive products, which are Examples of the invention, together with comparative products but the invention is not limited by the following inventive products.

Table 1 shows Examples and Comparative Examples regarding the hot casting repair mix of the present invention.

Evaluation of hot flowability: 800 g of a formulation shown in Table 1 was charged onto a castable plate in a furnace kept at 1000°C; after extinction, the castable plate was taken out of the furnace and an average value of the diameter of the resulting spread hot casting repair mix was measured as hot flowability.

Evaluation of hardening time: with regard to the hardening time, a ring-shaped metal flame having an inner diameter of 53 mm and a height of 40 mm was placed on a magnesia brick kept at 1000°C, 200 g of a sample was charged thereon, and the time requited for hardening the whole was measured. After hardening of the sample, adhesive strength was immediately measured by means of a shear adhesive strength-measuring machine.

Evaluation of apparent porosity: 1 kg of a sample was charged into a circle surrounded by magnesia bricks in a furnace kept at 1000°C and, after hardening, apparent porosity of the repaired body was also measured.

Evaluation of actual furnace ch number: for an actual furnace test, 600 kg of a hot casting repair mix was used in hot repairing of a 300 t steel converter lined with MgO-C brick and the number of charges when the remaining area of the hot casting repair mix became 20% or less of the area immediately after repairing was evaluated as durability.

Examples of the present invention had a short hardening time and also showed a good durability in the actual furnace test. Since adhesive strength was low and apparent porosity of the repaired body was large in Comparative Examples 1 and 2, the actual furnace test was not carried out. In Comparative Examples 3 and 4, the hardening time was short but durability on the actual furnace test was no good.

**[Table 1]**

| | | Example | | | | | Comparative Example | | | |
|---|---|---|---|---|---|---|---|---|---|---|
| | | 1 | 2 | 3 | 4 | 5 | 1 | 2 | 3 | 4 |
| Refractory aggregate (% by weight) | Magnesia aggregate 8 to 1 mm | 42 | 40 | 40 | 40 | 35 | 50 | 29.5 | 32 | 38 |
| | Magnesia aggregate 1 mm or less | 41 | 38 | 38 | 43 | 33 | 46 | 25 | 34 | 35 |
| Binder (% by weight) | Pitch powder (softening point 110°C) | 8 | 15 | 20 | 10 | 25 | 4 | 20 | 18 | |
| | Thermoplastic powdery phenol resin | | | | 5 | | | | | 20 |
| Fluidization promoter (% by weight) | Bisphenol A | | 3 | | | 3 | | | 1 | |
| | p-Alkylphenol (meting point 84°C) | 5 | | | | | | 25 | | |
| Iron powder (% by weight) | Iron powder average particle size 3 mm | | | | | | | | 15 | 7 |
| | Iron powder average particle size 1 mm | | 4 | | 2 | 4 | | 0.5 | | |
| | Iron powder average particle size 0.5 mm | 4 | | 2 | | | | | | |
| Test result | Hot flowability (mm) | 215 | 235 | 252 | 230 | 263 | 142 | 295 | 240 | 260 |
| | Hardening time (min) | 3 | 3 | 4 | 3 | 5 | 3 | 15 | 6 | 6 |
| | Adhesive strength (MPa) | 3.8 | 4.6 | 5.8 | 4.2 | 6.2 | 0.2 | 0.9 | 3.6 | 2.0 |
| | Apparent porosity (%) | 23.5 | 25.4 | 26.3 | 24.0 | 29.2 | 33.8 | 38.4 | 25.6 | 24.5 |
| | Actual furnace durable ch number | 13 | 15 | 18 | 14 | 16 | - | - | 3 | 6 |

While the invention has been described in detail and with reference to specific embodiments thereof, it will be apparent to one skilled in the art that various changes and modifications can be made therein without departing from the spirit and scope thereof.
The present application is based on Japanese Patent Application No. 2007-133444 filed on May 18, 2007, and the contents are incorporated herein by reference.
Also, all the references are incorporated as a whole.

## Claims

1. A hot casting repair mix comprising 5 to 30% by weight of a binder capable of forming a carbon bond in hot condition and 1 to less than 5% by weight of an iron powder and the balance consisting of a refractory aggregate.

2. The hot casting repair mix according to claim 1, wherein a fluidization promoter is used in an amount of 0.1 to 1% by weight relative to 1% by weight of the binder capable of forming a carbon bond in hot condition and the total amount of the binder capable of forming a carbon bond in hot condition and the fluidization promoter is 5 to 30% by weight and an iron powder is contained in an amount of 1 to less than 5% by weight and the balance consisting of a refractory aggregate.
